# EUROPÄISCHE PATENTSCHRIFT

(11) **EP 3 284 615 B1**
(45) Veröffentlichungstag und Bekanntmachung des Hinweises auf die Patenterteilung: **06.04.2022**
(21) Anmeldenummer: 17180928.8
(22) Anmeldetag: 12.07.2017
(51) Int. Cl.: B60B 3/04, B60B 5/02, B60B 23/06

(54) **VERBINDUNG VON FELGE UND RADSTERN BEI EINEM GEBAUTEN FAHRZEUGRAD**
CONNECTION OF RIM AND WHEEL STAR IN A CONSTRUCTED VEHICLE WHEEL
LIAISON DE JANTE ET CROISILLON POUR UNE ROUE DE VÉHICULE MONTÉE

(30) Priorität: 03.08.2016 DE 102016214379
(43) Veröffentlichungstag der Anmeldung: 21.02.2018
(73) Patentinhaber: Bayerische Motoren Werke Aktiengesellschaft, 80809 München (DE)
(72) Erfinder: Bui, Hoang Viet, 80933 München (DE)

(56) Entgegenhaltungen:
- WO-A1-2015/106760
- WO-A1-2016/037611
- WO-A1-2016/066161
- WO-A1-2016/066769
- DE-A1- 3 405 970

## Beschreibung

Verbindung von Felge und Radstern bei einem gebauten Fahrzeugrad

Die Erfindung betrifft eine Verbindung von Felge und Radstern oder Radscheibe bei einem gebauten Fahrzeugrad, wenigstens aus einem Radstern oder einer Radscheibe aus Metall und einer Felge aus Faserverbundwerkstoff, nach dem Oberbegriff des ersten Anspruchs.

Es ist bereits bekannt, Räder aus Faserverbundwerkstoffteilen und Metallteilen zu bauen, indem verschiedene Radeinzelteile vorgefertigt werden und danach das Rad aus diesen zusammengesetzt wird. Verbindungen von Teilen aus faserverstärktem Kunststoff, insbesondere kohlefaserverstärktem Kunststoff, CFK, haben das Problem des Fließens der Matrix unter Dauerbelastung. Bei einer lastgerechten Auslegung tritt dieser Effekt bei Fahrzeugrädern speziell im Bereich der Verschraubung der Felge in Laminat-Dicken-Richtung mit der Radscheibe oder dem Radstern auf. Während metallische Werkstoffe, wie Stahl oder Aluminium in einem wesentlich geringeren Maße zu solchem Fließen neigen.

Bekannt ist auch ein Verbindungskonzept für Hybridräder aus einem Aluminiumstern als Radstern mit einer CFK-Felge. Dabei wird auf dem Stern ein Entkopplungsblech angebracht und in dem Felgenbett positioniert. Daraufhin wird ein Loch mit einem Roboter durch das Felgenbett in den Stern gebohrt, ein Gewinde geschnitten und eine Buchse eingepresst. Abschließend wir eine M8-Schraube durch die Buchse in den Aluminiumstern gedreht. Die Schrauben werden mit einer Vorspannkraft von 29Nm nicht überelastisch angezogen.

Dabei werden die Schrauben und Buchsen mit dem Zwei-Komponenten-Klebstoff der Handelsbezeichnung DP-760 der Marke Scotch-Weld eingeklebt. Auf die Schraube wird eine Manschette mit dem Klebstoff der Handelsbezeichnung Staloc HP 955 geklebt. Dieses Teil hat überwiegend eine Dichtungsfunktion.

Das aufwändige Verbindungskonzept erfüllt vier Funktionen. Erstens die Übertragung von Kräften und Momenten, zweitens entsprechende Steifigkeits-, Festigkeits- und Betriebsfestigkeitsfunktionen, drittens den Schutz vor Korrosion und viertens eine Reifen-Dichtungsfunktion an den Schnittstellen.

Derzeit werden alle Fertigungsschritte zur Herstellung der Verbindung in einer Roboteranlage chronologisch nacheinander durchgeführt. Die Prozesse können nicht separat und unabhängig voneinander erfolgen. Die Taktzeit ist deswegen stark von der Anzahl und Auslegung der Roboteranlagen abhängig.

Die Buchse wie auch das Entkopplungsblech sind aufgrund der möglichen Korrosion aus einem kostenintensiven V4a-Material gefertigt. Ebenfalls werden aufgrund der Korrosion und der Krafteinleitung zum Aluminiumstern Titan-Schrauben verwendet. Durch die verwendeten teuren Materialien entstehen hohe Kosten bei der Herstellung der Felge. Zudem muss aufgrund der geringen Festigkeit des Aluminiums die Schraube über 16mm tief in den Stern eingeschraubt werden. Dafür sind die Verbindungsteile verhältnismäßig groß zu dimensionieren.

Außerdem sind durch das Verwenden von unterschiedlichen Klebstoffen mehrere Verfahrensschritte zu deren Auftragung nötig. Dabei sind die Fertigungszeiten und auch Herstellungskosten durch das Verwenden eines Zwei-Komponenten-Klebstoffs und der dafür nötigen Klebstoffmischung relativ hoch.

Die CH 710 074 A2 beschreibt ebenfalls ein gebautes Hybridrad mit einer Felge aus Kunststoff und einer Radschüssel aus Metall. Auch hier sind die Herstellkosten konstruktionsbedingt hoch.

Außerdem beschreibt die WO 2016/037611 A ein Fahrzeugrad mit einer Radfelge, einer Radscheibe und mindestens ein die Radscheibe und die Radfelge verbindendes Verbindungselement, wobei das Verbindungselement durch ein Durchgangsloch der Radfelge geführt und in einem Fügegang der Radscheibe gefügt ist. Es ist eine das Verbindungselement koaxial umgebende Langhülse vorgesehen, die derart ausgebildet und angeordnet ist, dass sie sich zumindest teilweise in eine korrespondierende Ausnehmung der Radfelge und eine korrespondierende Ausnehmung der Radscheibe formschlüssig erstreckt.

Es ist Aufgabe der Erfindung, ein Fahrzeugrad mit einer Radscheibe oder einem Radstern aus Metall und einer Felge aus Faserverbundwerkstoff, insbesondere CFK, bereitzustellen, das beanspruchungsgerecht optimiert ausgebildet und preiswert herzustellen ist.

Die Aufgabe wird mit den Merkmalen des Anspruchs 1 gelöst. Weitere Ausgestaltungen der Erfindung ergeben sich aus den abhängigen Ansprüchen.

Nach der Erfindung ist ein gebautes Fahrzeugrad, mit wenigstens mit einem Radstern oder einer Radscheibe aus Metall und einer Felge aus Faserverbundwerkstoff, wobei der Radstern oder die Radscheibe und die Felge mittels Gewindeschrauben miteinander verbunden sind, indem diese durch Bohrungen mit je einer darin eingeführten Buchse mit Kragen, der sich zwischen einem Kopf jeder Gewindeschraube und dem Felgenbett erstreckt, oder mit je einer sich zwischen einem Kopf jeder Gewindeschraube und dem Felgenbett befindlichen Scheibe, insbesondere aus Glasfaser, über den Umfang eines Felgenbetts verteilt, durch die Buchsen hindurchgesteckt, in den Radstern oder die Radscheibe eingeschraubt sind, dadurch gekennzeichnet, dass zur Aufnahme der Gewindeschrauben in Sacklöchern des Radsterns oder der Radscheibe wenigstens die Sacklöcher mit einem Gewindeeinsatz versehen sind, wovon sich wenigstens ein Gewindeeinsatz bis zu der Buchse oder der Scheibe hin erstreckt.

Dadurch können vorteilhafterweise Montageschritte vereinfacht oder eingespart werden, wodurch sich Fertigungszeiten reduzieren und die Kosten stark gesenkt werden. Darüber hinaus bietet das System aufgrund seines vereinfachten Aufbaus und der Verwendung von isolierenden Scheiben oder Buchsen oder Zwischenlagen oder Klebstoffschichten eine hohe Korrosionsschutzwirkung. Der Einsatz von Gewindeeinsätzen, insbesondere solcher mit der Handelsbezeichnung Helicoil, ermöglicht dabei eine bessere Kräfteverteilung bei einer geringeren Einschraubtiefe der Gewindeschrauben.

Bevorzugte Ausführungsformen des Fahrzeugrades sind dadurch gekennzeichnet, dass die Buchsen wenigstens am Innenumfang der Bohrungen mit der Felge und/oder dem Radstern oder der Radscheibe verklebt sind. Alternativ oder zusätzlich kann auch der Kragen der Buchsen mit dem Felgenbett verklebt sein.

Vorteilhafte Ausführungsformen des Fahrzeugrades sind dadurch gekennzeichnet, dass die Buchsen geteilt ausgebildet sind und wenigstens ein Buchsenteil einen Kragen besitzt und wenigstens die Buchsenteile am Innenumfang der Bohrungen mit dem Felgenbett verklebt sind. Zusätzlich können die Buchsenteile miteinander verklebt sein. Außerdem ist es vorteilhaft, wenn wenigstens ein Kragen eines Buchsenteils mit dem Felgenbett verklebt ist.

Ganz allgemein ist es von Vorteil, wenn die Gewindeschrauben in den Sacklöchern verklebt sind.

Eine noch bessere Isolierung zwischen Felge und Radstern oder Radscheibe wird erreicht, wenn wenigstens unter einen Kragen zwischen diesen und das Felgenbett eine entsprechende Zwischenlage eingebracht ist, wobei vorteilhafterweise wenigstens ein Kragen mit der Zwischenlage verklebt ist.

Bei der Verwendung einer dieser voneinander isolierenden Scheibe zwischen Schraubenkopf und Felge ist es weiter vorteilhaft, wenn die Scheibe mit dem Felgenbett verklebt ist.

Auf den Fertigungsvorgang vereinfachend und auf die Herstellzeit verkürzend wirkt sich besonders aus, wenn ein Klebstoff für Verbindungs- und Sicherungsverklebungen im Verklebungssystem Radstern oder Radscheibe mit der Felge ein Ein-Komponenten-Klebstoff ist.

Ein bevorzugtes Ausführungsbeispiel der Erfindung beschreibt die nachfolgende Beschreibung mit der zugehörigen Zeichnung. Es zeigen:
- Figur 1:: einen räumlich gezeichneten Teilquerschnitt eines Fahrzeugrads gemäß der Erfindung,
- Figur 2:: eine weitere Ausführungsform eines Fahrzeugrads gemäß der Erfindung, ebenfalls in einem räumlich gezeichneten Teilquerschnitt und
- Figur 3:: einen Querschnitt einer Felge im Bereich einer Durchsteckbohrung für eine Gewindeschraube zur Verbindung mit einem nicht gezeichneten Radstern oder einer Radscheibe.

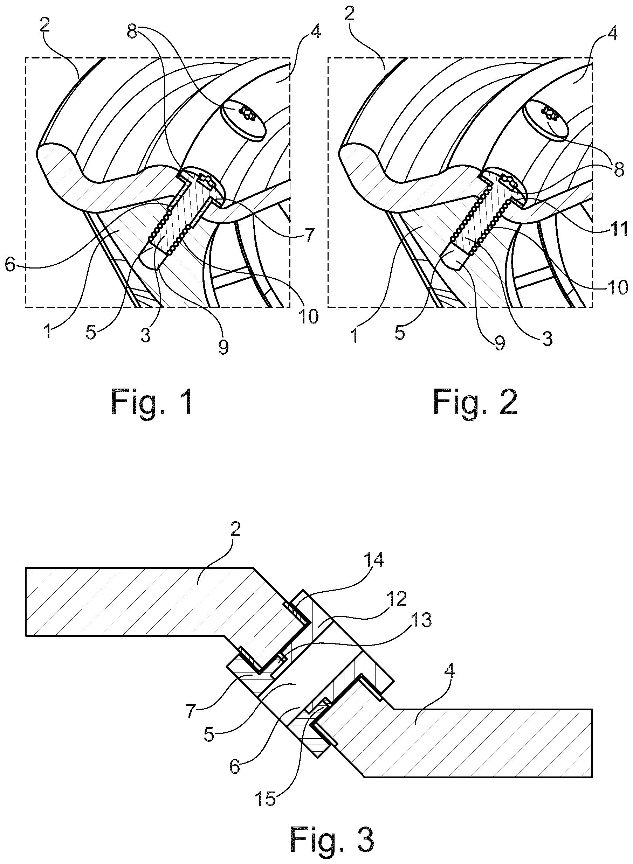

Die Figuren 1 bis 3 zeigen Teilbereiche von Fahrzeugrädern gemäß der Erfindung mit unterschiedlichen Verbindungen zwischen jeweils einem Radstern 1 aus einer Aluminiumlegierung und einer Felge 2 aus Faserverbundwerkstoff zur Aufnahme eines nicht gezeichneten Reifens nach dem Stand der Technik. Die Felge 2 und der Radstern 1 sind mittels Gewindeschrauben 3 so verbunden, dass bei dieser Verbindung sowohl der metallische Teil, der Radstern 1, als auch der Teil der Verbindung aus Faserverbundwerkstoff, insbesondere aus CFK, die Felge 2, die beim Betrieb des Fahrzeugrads entstehenden Kräfte aufnehmen und weiterleiten.

Dazu sind die Gewindeschrauben 3, in der Ausführungsform der Erfindung gemäß Figur 1, durch über den Umfang eines Felgenbetts 4 verteilte Bohrungen 5 mit je einer darin eingeführten Buchse 6, durch die Buchsen 6 hindurchgesteckt und in den Radstern 1 eingeschraubt. Die Buchsen 6 besitzen einen Kragen 7, der sich zwischen einem Kopf 8 jeder Gewindeschraube 3 und dem Felgenbett 4 erstreckt. Zur Aufnahme der Gewindeschrauben 3 in Sacklöchern 9 des Radsterns 1 sind wenigstens die Sacklöcher 9 mit einem Gewindeeinsatz 10 versehen.

Beim Fahrzeugrad in der Ausführungsform der Erfindung gemäß Figur 2, befindet sich im Gegensatz dazu zwischen dem Kopf 8 jeder Gewindeschraube 3 und dem Felgenbett 4 wenigstens je eine Scheibe 11. Jeder Gewindeeinsatz 10 ragt dann aus seinem Sackloch 9 heraus und erstreckt sich bis zu dieser Scheibe 11.

Zur Schraubensicherung und Isolierung wird für das Montieren der Gewindeschrauben 3, der Buchsen 6 wie auch der Scheiben 11 ein einheitlicher 1-Komponenten-Klebstoff, beispielsweise der Marke Henkel Loctite 9502, 9509, 9514 oder 5936 verwendet. Nach dem vollständigen Montieren der Felge 2 kann die Klebeverbindung durch eine Wärmeaktivierung im Ofenprozess gefestigt werden. Da das CFK-Felgenbett 4 selbst getempert werden muss, kann dieser Vorgang auch an das Ende der Montage gelegt und mit dem Aushärten des Klebstoffes kombiniert werden. Wie in dem Ausführungsbeispiel gemäß Figur 2 gezeigt, kann das Material der Gewindeschrauben 3 geändert und gegenüber dem Ausführungsbeispiel nach Figur 1 die V4a-Buchse 6 eingespart werden. Dafür wird nach dem Fräsen des nicht gezeichneten Sterns und des Felgenbetts 4 ein Gewindeeinsatz 10 der Marke Helicoil eingesetzt. Das ermöglicht wiederum auf eine vergleichsweise teure Titan-Schrauben zu verzichten und kostengünstigere St-Schrauben 10.9 oder Edelstahlschrauben als Gewindeschrauben 3 zu verwenden. Aufgrund der kritischen Korrosionswirkung zwischen dem Aluminium des Radsterns 1 und dem Kohlenstoff der Felge 2 werden Scheiben 11 aus Glasfaser auf der Kontaktfläche zum Aluminium-Radstern 1 hin eingesetzt, da Glasfaser ein sehr günstiges Material ist. Zusätzlich hat Glasfaser noch neutrale Eigenschaften bezüglich galvanischer Trennung zum Korrosionsschutz. Die Scheiben 11 können auch im Fertigungsprozess in das CFK-Felgenbett 4 integriert werden. Zum Korrosionsschutz zwischen Radstern 1 und Felge 2 befindet sich dazwischen eine Glasfaser-Zwischenlage. Diese Schicht kann direkt während der Herstellung der Felge 2 in deren Oberfläche integriert werden. Ferner können die Buchsen 6, wie in Figur 3 schematisch dargestellt, auch zweiteilig ausgeführt sein. Dabei kann ein Unterteil 12 jeder Buchse 6 mit jeweils einem Oberteil 13 verklebt oder verpresst sein. Zu einer Abdichtung und Fixierung der Teile werden diese mit Klebstoff versehen. Für eine bessere Haftung des Klebstoffes und zum Korrosionsschutz kann auf den Buchsenteilen 12, 13 eine KTL-Beschichtung vorgesehen sein. Zusätzlich können an den möglichen, zu fräsenden Stellen im Felgenbett 4 Glasfaser-Zwischenlagen zum Korrosionsschutz vorgesehen sein, ebenfalls direkt während der Herstellung der Felge 2 in deren Oberfläche integriert. Mit den Buchsen 6 können das CFK-Felgenbett 4 und der Aluminium-Radstern 1 separat voneinander verarbeitet und am Ende zusammengesetzt werden. Dies ermöglicht hohe Vorteile bei der Produktion hoher Stückzahl ohne große Investition in zusätzliche Betriebsmittel.

Durch Verwenden von 1-Komponenten-Klebstoffen 15 und Einsparen von teuren Metallen können hohe Kostenvorteile erzielt werden. Zudem können Montageschritte vereinfacht oder eingespart werden, wodurch sich Fertigungszeiten reduzieren und die Kosten weiter stark gesenkt werden. Darüber hinaus bietet die Erfindung aufgrund des vereinfachten Verbindungs-Aufbaus eine hohe Korrosionsschutzwirkung. Gewindeeinsätze der Marke Helicoil ermöglichen dabei eine bessere Kräfteverteilung bei einer geringeren Einschraubtiefe der Gewindeschrauben 3.

## Patentansprüche

1. Fahrzeugrad, gebaut wenigstens aus einem Radstern (1) oder einer Radscheibe aus Metall und einer Felge (2) aus Faserverbundwerkstoff, wobei der Radstern (1) oder die Radscheibe und die Felge (2) mittels Gewindeschrauben (3) miteinander verbunden sind, indem diese durch Bohrungen (5) mit je einer darin eingeführten Buchse (6) mit Kragen (7), der sich zwischen einem Kopf (8) jeder Gewindeschraube (3) und dem Felgenbett (4) erstreckt oder mit je einer sich zwischen einem Kopf (8) jeder Gewindeschraube (3) und dem Felgenbett (4) befindlichen Scheibe (11), insbesondere aus Glasfaser, über den Umfang eines Felgenbetts (4) verteilt, durch die Buchsen (6) hindurchgesteckt, in den Radstern (1) oder die Radscheibe eingeschraubt sind, **dadurch gekennzeichnet, dass** zur Aufnahme der Gewindeschrauben (3) in Sacklöchern (9) des Radsterns (1) oder der Radscheibe wenigstens die Sacklöcher (9) mit einem Gewindeeinsatz (10) versehen sind, wovon sich wenigstens ein Gewindeeinsatz (10) bis zu der Buchse (6) oder der Scheibe (11) hin erstreckt.

2. Fahrzeugrad nach Anspruch 1, **dadurch gekennzeichnet, dass** die Buchsen (6) wenigstens am Innenumfang der Bohrungen (5) mit der Felge (2) und/oder dem Radstern (1) oder der Radscheibe verklebt sind.

3. Fahrzeugrad nach einem der Ansprüche 1 oder 2, **dadurch gekennzeichnet, dass** der Kragen (7) der Buchsen (6) mit dem Felgenbett (4) verklebt ist.

4. Fahrzeugrad nach einem der Ansprüche 1 bis 3, **dadurch gekennzeichnet, dass** die Buchsen (6) geteilt ausgebildet sind und wenigstens ein Buchsenteil (12, 13) einen Kragen (7) besitzt und wenigstens die Buchsenteile (12, 13) am Innenumfang der Bohrungen (5) mit dem Felgenbett (4) verklebt sind.

5. Fahrzeugrad nach Anspruch 4, **dadurch gekennzeichnet, dass** die Buchsenteile (12, 13) miteinander verklebt sind.

6. Fahrzeugrad nach Anspruch 4 oder 5, **dadurch gekennzeichnet, dass** wenigstens ein Kragen (7) eines Buchsenteils (12, 13) mit dem Felgenbett (4) verklebt ist.

7. Fahrzeugrad nach einem der Ansprüche 1 bis 6, **dadurch gekennzeichnet, dass** die Gewindeschrauben (3) in den Sacklöchern (9) verklebt sind.

8. Fahrzeugrad nach einem der Ansprüche 1 bis 7, **dadurch gekennzeichnet, dass** wenigstens unter einen Kragen (7) zwischen diesen und das Felgenbett (4) eine Zwischenlage (14), insbesondere aus Glasfaser, eingebracht ist.

9. Fahrzeugrad nach Anspruch 8, **dadurch gekennzeichnet, dass** der wenigstens eine Kragen (7) mit der Zwischenlage (14) verklebt ist.

10. Fahrzeugrad nach Anspruch 1, **dadurch gekennzeichnet, dass** die Scheibe (11) mit dem Felgenbett (4) verklebt ist.

11. Fahrzeugrad nach einem der Ansprüche 2 bis 10, **dadurch gekennzeichnet, dass** ein Klebstoff für Verbindungsverklebungen ein Ein-Komponenten-Klebstoff (15) ist.

12. Fahrzeugrad nach einem der Ansprüche 1 bis 11, **dadurch gekennzeichnet, dass** die Scheibe (11) oder die Zwischenlage (14), insbesondere aus Glasfaser, direkt während der Herstellung der Felge 2 mit deren Oberfläche verbunden oder in diese eingebaut wird.

## Claims

1. Vehicle wheel, constructed from at least one wheel spider (1) or a wheel disc made of metal, and a rim (2) made of fibre composite material, wherein the wheel spider (1) or the wheel disc and the rim (2) are connected together by means of threaded screws (3) by the latter being screwed into the wheel spider (1) or the wheel disc through bores (5) with a respective bushing (6), introduced into the latter, with a collar (7) that extends between a head (8) of each threaded screw (3) and the rim well (4) or with a respective disc (11), in particular made of glass fibre, located between a head (8) of each threaded screw (3) and the rim well (4), in a manner distributed around the circumference of a rim well (4) and inserted through the bushings (6), **characterized in that**, for the reception of the threaded screws (3) in blind holes (9) in the wheel spider (1) or the wheel disc, at least the blind holes (9) are provided with a threaded insert (10), of which at least one threaded insert (10) extends as far as the bushing (6) or the disc (11).

2. Vehicle wheel according to Claim 1, **characterized in that** the bushings (6) are adhesively bonded to the rim (2) and/or to the wheel spider (1) or the wheel disc at least at the inner circumference of the bores (5).

3. Vehicle wheel according to either of Claims 1 and 2, **characterized in that** the collar (7) of the bushings (6) is adhesively bonded to the rim well (4) .

4. Vehicle wheel according to one of Claims 1 to 3, **characterized in that** the bushings (6) are formed in a divided manner, and at least one bushing part (12, 13) has a collar (7) and at least the bushing parts (12, 13) are adhesively bonded to the rim well (4) at the inner circumference of the bores (5).

5. Vehicle wheel according to Claim 4, **characterized in that** the bushing parts (12, 13) are adhesively bonded together.

6. Vehicle wheel according to Claim 4 or 5, **characterized in that** at least one collar (7) of a bushing part (12, 13) is adhesively bonded to the rim well (4).

7. Vehicle wheel according to one of Claims 1 to 6, **characterized in that** the threaded screws (3) are adhesively bonded in the blind holes (9).

8. Vehicle wheel according to one of Claims 1 to 7, **characterized in that** an intermediate layer (14), in particular made of glass fibre, has been introduced at least under a collar (7) between the latter and the rim well (4).

9. Vehicle wheel according to Claim 8, **characterized in that** the at least one collar (7) is adhesively bonded to the intermediate layer (14).

10. Vehicle wheel according to Claim 1, **characterized in that** the disc (11) is adhesively bonded to the rim well (4).

11. Vehicle wheel according to one of Claims 2 to 10, **characterized in that** an adhesive for adhesively bonding connections is a one-component adhesive (15) .

12. Vehicle wheel according to one of Claims 1 to 11, **characterized in that** the disc (11) or the intermediate layer (14), in particular made of glass fibre, is connected to the surface of the rim (2) or incorporated into the latter directly during the production thereof.

## Revendications

1. Roue de véhicule, composée au moins d'un croisillon (1) ou d'un disque de roue en métal et d'une jante (2) en matériau composite renforcé par des fibres, le croisillon (1) ou le disque de roue et la jante (2) étant reliés l'un à l'autre au moyen de vis filetées (3), par le fait que celles-ci sont vissées dans le croisillon (1) ou le disque de roue à travers des alésages (5) dotés respectivement d'une douille (6) insérée dans ceux-ci et dotée d'une collerette (7) qui s'étend entre une tête (8) de chaque vis filetée (3) et la base de jante (4) ou dotés respectivement d'une rondelle (11), en particulier en fibres de verre, se trouvant entre une tête (8) de chaque vis filetée (3) et la base de jante (4), de manière répartie sur la périphérie d'une base de jante (4), de manière enfichée à travers les douilles (6), **caractérisée en ce que** pour la réception des vis filetées (3) dans des trous borgnes (9) du croisillon (1) ou du disque de roue, au moins les trous borgnes (9) sont dotés d'un insert fileté (10), parmi lesquels au moins un insert fileté (10) s'étend jusqu'à la douille (6) ou la rondelle (11).

2. Roue de véhicule selon la revendication 1, **caractérisée en ce que** les douilles (6) sont collées à la jante (2) et/ou au croisillon (1) ou au disque de roue au moins à la périphérie intérieure des alésages (5).

3. Roue de véhicule selon l'une des revendications 1 ou 2, **caractérisée en ce que** la collerette (7) des douilles (6) est collée à la base de jante (4).

4. Roue de véhicule selon l'une des revendications 1 à 3, **caractérisée en ce que** les douilles (6) sont réalisées de manière divisée et au moins une partie de douille (12, 13) possède une collerette (7) et au moins les parties de douille (12, 13) sont collées à la base de jante (4) à la périphérie intérieure des alésages (5).

5. Roue de véhicule selon la revendication 4, **caractérisée en ce que** les parties de douille (12, 13) sont collées l'une à l'autre.

6. Roue de véhicule selon la revendication 4 ou 5, **caractérisée en ce qu'**au moins une collerette (7) d'une partie de douille (12, 13) est collée à la base de jante (4).

7. Roue de véhicule selon l'une des revendications 1 à 6, **caractérisée en ce que** les vis filetées (3) sont collées dans les alésages borgnes (9).

8. Roue de véhicule selon l'une des revendications 1 à 7, **caractérisée en ce qu'**au moins en dessous d'une collerette (7), entre celle-ci et la base de jante (4), une couche intermédiaire (14), en particulier en fibres de verre, est introduite.

9. Roue de véhicule selon la revendication 8, **caractérisée en ce que** l'au moins une collerette (7) est collée à la couche intermédiaire (14).

10. Roue de véhicule selon la revendication 1, **caractérisée en ce que** la rondelle (11) est collée à la base de jante (4).

11. Roue de véhicule selon l'une des revendications 2 à 10, **caractérisée en ce qu'**un adhésif pour des collages de liaison est un adhésif à un composant (15).

12. Roue de véhicule selon l'une des revendications 1 à 11, **caractérisée en ce que** la rondelle (11) ou la couche intermédiaire (14), en particulier en fibres de verre, est, directement pendant la fabrication de la jante (2), reliée à sa surface ou intégrée dans celle-ci.
